# EUROPÄISCHE PATENTANMELDUNG

(11) **EP 0 723 922 A2**
(43) Veröffentlichungstag der Anmeldung: **31.07.1996**
(21) Anmeldenummer: 96100321.7
(22) Anmeldetag: 11.01.1996
(51) Int. Cl.: B65D 90/02

(54) **Hohlkörper met mehrschichtigem Wandaufbau und Verfahren zu dessen Herstellung**

(30) Priorität: 24.01.1995 DE 19502085
(71) Anmelder: BAYER AG, 51368 Leverkusen (DE)
(72) Erfinder: Eizenberger, Heinrich, D-72827 Wannweil (DE); Grigat, Ernst, Dr., D-51381 Leverkusen (DE); Driessen, Hans-Gerd, D-47809 Krefeld (DE)

(57) **Zusammenfassung**

Hohlkörper (Tank) mit mehrschichtigem Wandaufbau, dadurch gekennzeichnet, daß der Wandaufbau von außen nach innen aus Schichten aus
- massivem Polyamid,
- geschäumtem, bevorzugt offenzellig geschäumtem Polyamid,
- massivem Polyamid oder Polyurethan und
- gegebenenfalls zusätzlich massivem Polyurethan
besteht, wobei jede dieser Schichten gegebenenfalls in mehreren Lagen aufgebracht ist.

## Beschreibung

Die Erfindung betrifft einen Hohlkörper mit mehrschichtigem Wandaufbau und ein Verfahren zu dessen Herstellung.

Hohlkörper, z.B. Kunststofftanks zur Lagerung von Flüssigkeiten, insbesondere Brenn- und Treibstoffen sind bekannt. Polyamid oder Polyethylen sind die dabei gebräuchlichsten Materialien. Für verschiedene Zwecke, beispielsweise die Lagerung von Heizöl, ist eine zusätzliche Leckagesicherung zur Vermeidung von Umweltschäden erforderlich. Diese Sicherung wird üblicherweise in Form einer Auffangwanne oder einer doppelten Tankwand ausgeführt. Eine doppelte Tankwand ist gegenüber einer Auffangwanne vorteilhaft, wenn der Tank unterirdisch angeordnet oder beispielsweise in der Altbausanierung in einen Keller gestellt wird, der dann nicht in eine Wanne umgebaut werden muß.

Da doppelwandige Tanks oft mit einer Leckagedetektion ausgestattet werden, um eine Leckage der inneren Tankwand anzuzeigen, während die äußere Tankwand den Inhalt zurückhält, ist es notwendig, daß die Schicht zwischen den beiden Tankwänden von dem betreffenden Inhaltsstoff, beispielsweise Heizöl, oder von der Leckagedetektionsflüssigkeit durchflossen werden kann.

Zur Herstellung z.B. doppelwandiger Tanks werden, wenn Kunststoffe verwendet werden, entweder nur in einer Schicht Kunststoffe eingesetzt (z.B. WO 8102562 oder CH-A 440 134), wobei die andere Schicht meist aus Beton oder Edelstahl besteht, oder die Schichten in mehreren, in der Fertigungsweise unterschiedlichen, Arbeitsgängen erstellt (z.B. US-A 4739895, EP-A 470 321 , EP-A 520 978). Unter unterschiedlichen Arbeitsgängen ist beispielsweise das thermoplastische Formen einer Tankwand und das Bestreichen oder Spritzen mit Epoxyharzen nach dem Einlegen von Folien oder Matten zu verstehen.

Als Abstandhalter dienen beispielsweise Drahtgitter (CH-A 440 134), Noppenfolien (EP-A 470 321), Packpapier (CH-A 618 658), Vliese (DE-A 658 971), harzgetränkte Glasfasermatten (EP-A 520 978).

Ein wesentlicher Punkt in der Sicherheit ist auch die mechanische Stabilität von Tanks. Vorteilhaft sind also Systeme, die eine deutliche Festigkeitserhöhung der Tankwände bewirken.

Die Aufgabe bestand darin, einen doppelwandigen Sicherheitshohlkörper (z.B. Tank) mit der Möglichkeit zur Leckageanzeige der inneren Tankwand zu konstruieren, der in einem einfachen, einheitlichen Prozeß herstellbar ist, und zusätzlich eine gegenüber einwandigen Tanks erheblich verbesserte mechanische Festigkeit aufweist.

Die Lösung dieser Aufgabe ist die Entwicklung von Hohlkörpern, z.B. Tanks, mit mehrschichtigem Wandaufbau, dadurch gekennzeichnet, daß der Wandaufbau von außen nach innen aus Schichten aus
- massivem Polyamid,
- geschäumtem, bevorzugt offenzellig geschäumtem Polyamid,
- massivem Polyamid oder Polyurethan und
- gegebenenfalls zusätzlich massivem Polyurethan
besteht.

Jede dieser Schichten darf in mehreren Lagen aufgebracht werden. Das Wort "Schicht" bezeichnet erfindungsgemäß das Zusammenfassen einheitlicher Lagen (einheitlich im Sinne des Zustands - beispielsweise Schaum oder massiv - bzw. des Materials - beispielsweise Polyamid oder Polyurethan).

Dieser Aufbau gewährleistet nicht nur die notwendige Doppelwandigkeit mit der Möglichkeit zur Leckagedetektion, sondern ist darüber hinaus sehr einfach herzustellen. Durch die feste Haftung der Schaumschicht an der inneren und äußeren Wand gewinnt man eine erhebliche Festkeit der Gesamtkonstruktion gegenüber mechanischen Einflüssen. Durch die Wahl fester, aber dennoch elastischer Materialien, ist eine hohe Widerstandsfähigkeit, insbesondere gegen Schlag- oder Druckeinwirkung, gewährleistet.

Gegenstand der Erfindung sind Hohlkörper, vorzugsweise Tanks mit mehrschichtigem Wandaufbau, dadurch gekennzeichnet, daß der Wandaufbau von außen nach innen aus Schichten aus
- massivem Polyamid,
- geschäumtem, bevorzugt offenzellig geschäumtem Polyamid,
- masivem Polyamid oder Polyurethan und
- gegebenenfalls zusätzlich massivem Polyurethan
besteht, wobei jede dieser Schichten gegebenenfalls in mehreren Lagen aufgebracht ist.

Die erfindungsgemäßen Hohlkörper können zur Lagerung und/oder dem Transport von Flüssigkeiten, bevorzugt brennbaren und/oder giftigen Flüssigkeiten, besonders bevorzugt Heizöl, verwendet werden.

Die erfindungsgemäßen Hohlkörper können auch zur thermischen und/oder mechanischen Abschirmung, beispielsweise als Außenkörper für Motorradauspuffe verwendet werden.

Der erfindungsgemäße mehrschichtige Hohlkörperaufbau ist für Tanks mit einem Fassungsvermögen zwischen 1 l und 5 000 l, bevorzugt 500 l bis 2 500 l, vorgesehen. Prinzipiell sind auch größere oder kleinere Tanks nach dieser Methode machbar.

Die äußere Schicht des erfindungsgemäßen Hohlkörpers besteht aus Polyamid.

Polyamid im erfindungsgemäßen Sinn ist Polyamid 12 (Polylaurinlactam) oder Polyamid 6 (Polycaprolatam) oder Copolyamide mit Hauptbestandteilen 12 oder 6. Bevorzugt ist durch aktivierte anionische Polymerisation hergestelltes Polyamid 6 oder durch aktivierte anionische Polymerisation hergestelltes Copolyamid mit Hauptbestanteil Polycaprolactam.

Die aktivierte anionische Polymerisation von Lactamen zu Polyamiden wird in technischem Maßstab so durchgeführt, daß man einerseits eine Lösung von Katalysator in Lactam und andererseits eine Lösung von Aktivator in Lactam herstellt, wobei üblicherweise beide Lösungen so zusammengesetzt sind, daß ein Zusammengeben im gleichen Verhältnis die gewünschte Gesamtrezeptur ergibt. Man kann ebenso andere Zusammensetzungen wählen, beispielsweise konzentrierten Aktivator zu einer katalysatorhaltigen Lactamschmelze dosieren. Weitere Additive können je nach Verträglichkeiten in die Aktivator-, Katalysator- oder gegebenenfalls Lactamschmelze gegeben werden.

Die Polymerisation erfolgt durch Vermischen der Einzellösungen zur Gesamtrezeptur bei 80°C bis 200°C, bevorzugt 100°C bis 140°C.

Als Lactame kommen cyclische Lactame mit 6 bis 12 C-Atomen in Frage, bevorzugt ω-Laurinlactam und besonders bevorzugt ε-Caprolactam.

Der Katalysator im erfindungsgemäßen Sinne ist eine starke Base wie beispielsweise Alkali- oder Erdalkalilactamat, bevorzugt als Lösung in Lactam, besonders bevorzugt Natriumcaprolactamat in ε-Caprolactam.

Als Aktivator können N-Acyllactame oder Säurechloride oder bevorzugt, aliphatische Isocyanate, besonders bevorzugt Oligomere des Hexamethylendiisocyanats verwendet werden. Als Aktivator kann sowohl die Reinsubstanz wie auch bevorzugt eine Lösung, beispielsweise in N-Methylpyrrolidon, eingesetzt werden.

Weitere Additive können beispielsweise Schlagzähmodifikatoren, Flammschutzmittel, Nukleierungshilfsmittel, Farbstoffe, Füllöle, Stabilisatoren, Oberflächenverbesserer, Füll- oder Verstärkungsstoffe oder Entformungshilfsmittel sein.

Die Schaumschicht zwischen der inneren und der äußeren massiven Wand besteht erfindungsgemäß aus geschäumtem Polyamid.

Polyamidschaum im erfindungsgemäßen Sinn ist durch aktivierte anionische Polymerisation hergestelltes Polyamid 12 (Polylaurinlactam) oder Polyamid 6 (Polycaprolactam) oder Copolyamide mit Hauptbestandteilen 12 oder 6, das während der Polymerisation aufgeschäumt wird. Durch aktivierte anionische Polymerisation hergestelltes aufgeschäumtes Polyamid 6 ist bevorzugt.

Die aktivierte anionische Polymerisation von Lactamen zu Polyamidschaum wird in der Regel in technischem Maßstab so durchgeführt, daß man einerseits eine Lösung von Katalysator und Treibmittelzusatz in Lactam und andererseits eine Lösung von Aktivator und Treibmittelzusatz in Lactam herstellt, wobei üblicherweise beide Lösungen so zusammengesetzt sind, daß ein Zusammengeben im gleichen Verhältnis die gewünschte Gesamtrezeptur ergibt. Das ist jedoch nicht notwendig. Man kann ebenso andere Zusammensetzungen wählen, beispielsweise konzentrierten Aktivator zu einer katalysatorhaltigen Lactamschmelze dosieren. Die Treibmittelzusätze sowie weitere Additive können je nach Verträglichkeiten in die Aktivator-, Katalysator- oder gegebenenfalls Lactamschmelze gegeben werden.

Die Polymerisation erfolgt durch Vermischen der Einzellösungen zur Gesamtrezeptur bei 80°C bis 200°C, bevorzugt 100°C bis 140°C.

Als Lactame kommen cyclische Lactame mit 6 bis 12 C-Atomen in Frage, bevorzugt Laurinlactam und besonders bevorzugt ε-Caprolactam.

Der Katalysator für Polyamidschaum im erfindungsgemäßen Sinne ist eine starke Base, beispielsweise Alkali- oder Erdalkalilactamat, bevorzugt als Lösung in Lactam, besonders bevorzugt Natriumcaprolactamat in ε-Caprolactam.

Der Aktivator für Polyamidschaum im erfindungsgemäßen Sinne können N-Acyllactame oder Säurechloride oder, bevorzugt, aliphatische Isocyanate sein. Besonders bevorzugt ist Hexamethylendiisocyanat. Als Aktivator kann sowohl die Reinsubstanz wie auch Derivate, beispielsweise der durch Umsetzung mit Lactam erhältliche Harnstoff, oder eine Lösung, beispielsweise in N-Methylpyrrolidon, dienen.

Als Treibmittelzusatz können erfindungsgemäß verdampfbare oder bevorzugt gasabspaltende Verbindungen dienen, darunter bevorzugt Hydride und besonders bevorzugt Natriumborhydrid.

Weitere Additive können beispielsweise Schlagzähmodifikatoren, Flammschutzmittel, Nukleierungshilfsmittel, Farbstoffe, Füllöle, Stabilisatoren, Oberflächenverbesserer, Füll- oder Verstärkungsstoffe und Entformungshilfsmittel sein.

Die massive Polyurethanschicht besteht bevorzugt aus einem Harnstoffgruppen enthaltenden Polyurethanwerkstoff. Dieser wird in der Form durch Zusammengeben einer Polyolmischung und einer Isocyanatmischung hergestellt.

Die Polyolmischung besteht aus:
50 bis 95 Gew.-% di- oder höherfunktionell OH-terminierten Polyestern bzw. Polyestergemischen oder bevorzugt di- oder höherfunktionell OH-terminierten Polyethern bzw. Polyethergemischen, oder Gemischen daraus,
5 bis 50 Gew.-% Katalysatoren, Kettenverlängerern und Additiven wie beispielsweise Schmiermittel, und
2 bis 5 Gew.-% Treibmittel, bevorzugt Wasser,
mit bevorzugt einer Gesamt-OH-Zahl der Mischung von 100 bis 500, besonders bevorzugt 220 bis 370 (OH-Zahlen bestimmt nach DIN 53 240).

Die Isocyanatmischung besteht aus aromatischen di- oder höherfunktionellen Isocyanaten oder deren Prepolymeren. Bevorzugt sind 4,4'-Diisocyanatodiphenylmethan, Prepolymere des 4,4'-Diisocyanatodiphenylmethans, phosgenierte Anilin-Formaldehyd-Kondensate, sowie Gemische daraus.

Bevorzugt sind Isocyanatmischungen mit einem NCO-Gehalt von 20 bis 38 Gew.-%, besonders bevorzugt von 25 bis 34 Gew.-%.

Das erfindungsgemäße Verfahren zur Herstellung des erfindungsgemäßen Hohlkörpers, z.B. Tanks, besteht darin, daß eine Hohlform, beispielsweise eine Form wie sie üblicherweise zur Herstellung einwandiger Gußpolyamid-Tanks verwendet wird, gleichzeitig um zwei Achsen rotiert wird und nacheinander mit den reaktiven Mischungen zur Herstellung der einzelnen Lagen, nacheinander von außen nach innen, so befüllt wird, daß die folgende Schicht jeweils nach dem Ausreagieren der vorhergehenden Schicht aufgebracht wird. Die Formtemperatur sollte 120°C bis 220°C, bevorzugt 150°C bis 180°C, betragen. Das Polyurethansystem kann direkt nach dem Ausreagieren der Gußpolyamidschicht auf das noch heiße Gußpolyamid aufgetragen werden, kann jedoch auch nach dem Abkühlen und Entformen in einem völlig getrennten Arbeitsgang, beispielsweise bei Raumtemperatur, aufgebracht werden.

Die erfindungsgemäßen Tanks können zur Lagerung und/oder dem Transport von Flüssigkeiten verwendet werden, insbesondere von brennbaren und/oder giftigen und/oder umweltschädlichen Flüssigkeiten, Ölen usw.

Die erfindungsgemäßen Tanks können durch die für Kunststoffe üblichen Methoden mechanisch nachbearbeitet werden. Auch die nachträgliche Montage einer Leckageanzeigemöglichkeit zwischen der inneren und der äußeren Tankwand ist möglich.

Die erfindungsgemäßen Tanks können zur Lagerung und/oder dem Transport von Kraftstoffen, beispielsweise Benzin oder Diesel, beispielsweise in PKW, LKW oder Motorrädern verwendet werden.

Die erfindungsgemäßen Hohlkörper eignen sich auch z.B. zur akustischen, thermischen und/oder mechanischen Abschirmung, beispielsweise als Außenkörper für Motorradauspuffe, Schalldämpfer etc.

### Beispiel

Eine rechteckige Rotationsgußform mit 15 l Inhalt wird unter Rotation um zwei Achsen gleichmäßig auf 200°C aufgeheizt.

Dann wird kurz angehalten, 600 g einer Polyamid-Polymerisationsmischung eingefüllt, und sofort um zwei Achsen gleichzeitig weiterrotiert. Die Polyamid-Polymerisationsmischung besteht aus
97,8 Gew.-% Caprolactam,
1,7 Gew.-% Katalysator (18 Gew.-%ige Lösung von Natriumlactamat in ε-Caprolactam) und
0,5 Gew.-% Aktivator (Oligomeres des Hexamethylendiisocyanat als 70 Gew.-%ige Lösung in N-Methylpyrrolidon).

Nach 5 Minuten ist die Polymerisation beendet. Nun wird wieder angehalten und die Polyamid-Schaummischung (600 g) eingefüllt. Man rotiert sofort nach dem Einfüllen wieder um zwei Achsen gleichzeitig.

Nach 7 Minuten ist die Verschäumung beendet. Nun wird wieder angehalten und die Reaktionsmischung zur Erzeugung der massiven Polyamid-Innenschicht (600 g) eingefüllt. Man rotiert sofort nach dem Einfüllen wieder um zwei Achsen gleichzeitig.
Nach einer Reaktionszeit von 4 Minuten wird entformt.

Man erhält einen Hohlkörper mit einer massiven Polyamidaußenschicht, einer offenzelligen Polyamid-Schaumschicht und einer massiven Polyamid-Innenschicht

## Patentansprüche

1. Hohlkörper mit mehrschichtigem Wandaufbau, dadurch gekennzeichnet, daß der Wandaufbau von außen nach innen aus Schichten aus
- massivem Polyamid,
- geschäumtem, bevorzugt offenzellig geschäumtem Polyamid,
- massivem Polyamid oder Polyurethan und
- gegebenenfalls zusätzlich massivem Polyurethan
besteht, wobei jede dieser Schichten gegebenenfalls in mehreren Lagen aufgebracht ist.

2. Hohlkörper nach Anspruch 1, dadurch gekennzeichnet, daß das Polyamid Polyamid 12 (Polylaurinlactam) oder Polyamid 6 (Polycaprolactam) oder Copolyamide mit Hauptbestandteilen 12 oder 6 ist.

3. Hohlkörper nach Anspruch 1, dadurch gekennzeichnet, daß das offenzellig geschäumte Polyamid durch aktivierte anionische Polymerisation hergestelltes Polyamid 12 (Polylaurinlactam) oder Polyamid 6 (Polycaprolactam) oder Copolyamide mit Hauptbestandteilen 12 oder 6 ist, das während der Polymerisation aufgeschäumt wird.

4. Hohlkörper nach Anspruch 1, dadurch gekennzeichnet, daß das massive Polyurethan in der Form durch Zusammengeben einer Polyolmischung und einer Isocyanatmischung hergestellt wird.

5. Hohlkörper gemäß den Ansprüchen 1 bis 4 als Tank.

6. Verfahren zur Herstellung des Hohlkörper nach Anspruch 1, dadurch gekennzeichnet, daß eine Form um zwei Achsen gleichzeitig rotiert und die reaktiven Schmelzen zur Herstellung der Schichten so eingefüllt werden, daß die folgende Schicht jeweils nach dem Ausreagieren der vorhergehenden Schicht aufgebracht wird und daß die gegebenenfalls zusätzliche Polyurethanschicht unverzüglich anschließend oder nachträglich eingebracht werden kann.

7. Verwendung der Hohlkörper nach Anspruch 1 als Vorratsbehälter für Öle und Treibstoffe.
